# EUROPÄISCHE PATENTANMELDUNG

(11) **EP 1 225 066 A2**
(43) Veröffentlichungstag der Anmeldung: **24.07.2002**
(21) Anmeldenummer: 02000852.0
(22) Anmeldetag: 15.01.2002
(51) Int. Cl.: B60C 11/24, B60C 11/00, B60C 11/13

(54) **Verfahren zur Messung der Profiltiefe eines Reifens**

(30) Priorität: 19.01.2001 DE 10102534
(71) Anmelder: Continental Aktiengesellschaft, 30165 Hannover (DE)
(72) Erfinder: Gauterin, Frank, Dr., 31535 Neustadt (DE); Hartmann, Klaus, 31535 Neustadt (DE); Grünberg, Heiko, Dr., 31303 Burgdorf (DE)

(57) **Zusammenfassung**

Verfahren zur Messung der Profiltiefe eines Reifens im Betriebszustand während des Abrollens, wobei die während des Abrollens des Reifens auf dem Untergrund durch die Profilteilung und / oder Profilgeometrie erzeugten Schwingungen des Reifens bzw. Schwingungen von Reifenteilen detektiert und in einer Auswerteeinheit mit einem charakteristischen Sollwert / Schwellenwert verglichen werden, welcher einer durch ausreichende Profiltiefe erzeugten solchen Schwingung entspricht, wobei die Auswerteeinheit bei einer Abweichung der detektierten Schwingung vom Sollwert / Schwellenwert ein Signal ausgibt.

## Beschreibung

Die Erfindung betrifft ein Verfahren zur Messung der Profiltiefe eines Reifens, insbesondere eines Fahrzeugluftreifens, wobei die Messung der Profiltiefe im Betriebszustand während des Abrollens des Reifens erfolgt. Weiterhin betrifft die Erfindung einen Reifen zur Durchführung eines solchen Verfahrens sowie dessen Verwendung.

Verfahren zur Detektion der Profiltiefe eines Reifens im Betriebszustand, d.h. während des Abrollens bzw. während der Fahrt eines Fahrzeuges, sind grundsätzlich bekannt und dienen dazu, möglichst frühzeitig vor Erreichen einer für die Profiltiefe kritischen Untergrenze eine Warnung für den Fahrer oder Kontrollpersonal zu erzeugen.

So offenbart bereits etwa die DE PS 596 861 eine Anzeigevorrichtung für den höchstzulässigen Verschleiß bei Gummireifen, bei der in der Lauffläche des Reifens federnde Elemente angeordnet sind, die nach Verschleiß einer bestimmten Dicke der Gummideckschicht nach außen schnellen und beim Drehen des Rades auf elektrischem Wege Alarmsignale auslösen. Nachteile solcher Federelemente liegen in dem dadurch erhöhten Reifengewicht sowie in der erschwerten Herstellung solcher Reifen.

Die DE OS 2 314 915 offenbart einen Fahrzeugreifen, in dessen Lauf- / Profilflächen eine oder mehrere anders gefärbte oder strukturierte Schichten eingebettet sind, die sich von den vorgesehenen übrigen Abnutzungsflächen unterscheiden und nach entsprechendem Profilverschleiß sichtbar werden. Die Sichtbarkeit solcher Schichten wird jedoch durch Verschmutzungen oder Ablagerungen während des Betriebs stark beeinträchtigt.

Für die Erfindung bestand also die Aufgabe, ein Verfahren zur Detektion der Profiltiefe eines Reifens im Betriebszustand bereitzustellen, welches einfach und nicht nur mit Reifen erhöhten Gewichts oder komplizierterer Herstellung anzuwenden ist und welches in allen Betriebszuständen und auch in schmutzbelasteter Umgebung funktionsfähig ist.

Gelöst wird die Aufgabe durch die Merkmale des Hauptanspruchs. Weitere vorteilhafte Ausbildungen sind in den Unteransprüchen enthalten. Ebenfalls offenbart ist ein Reifen zur Durchführung im erfindungsgemäßen Verfahrens sowie dessen Verwendung.

Das erfindungsgemäße Verfahren besteht darin, dass die während des Abrollens des Reifens auf dem Untergrund durch die Profilteilung und / oder Profilgeometrie erzeugten Schwingungen des Reifens bzw. Schwingungen von Reifenteilen detektiert und in einer Auswerteeinheit mit einem charakteristischen Sollwert / Schwellenwert für die Schwingungen verglichen werden, welcher einer durch ausreichende Profiltiefe erzeugten solchen Schwingung entspricht, wobei die Auswerteeinheit bei einer Abweichung der detektierten Schwingung vom Sollwert / Schwellenwert, die einer Unterschreitung der Profiltiefe entspricht, ein Signal ausgibt.

Auf diese Weise lässt sich durch eine reine Schwingungsauswertung, die mit Hilfe der heutigen Elektronik und der dadurch ermöglichten Bearbeitung auch komplexerer Algorithmen zudem relativ preiswert und ohne umfangreiche Aggregate durchgeführt werden kann, jederzeit eine Überprüfung der Profiltiefe realisieren, insbesondere dadurch, dass das Ausgangssignal, nämlich die durch die Profilteilung und / oder Profilgeometrie hervorgerufenen Schwingungen, also z.B. die Ablaufgeräusche eines Reifens, permanent vorhanden und nicht erst erzeugt werden müssen.

Eine vorteilhafte Ausbildung besteht darin, dass die durch die Profilteilung und / oder Profilgeometrie erzeugten Körperschwingungen / Körperschallschwingungen des Reifens oder der Fahrwerks- oder Karosserieteile detektiert werden. Zur Aufnahme der Schwingungen genügt dann ein einfacher Schwingungssensor an Karosserie- oder Fahrwerksbauteilen, angebracht beispielsweise in der Nähe des Reifens.

Eine weitere vorteilhafte Ausbildung besteht darin, dass die durch die Profilteilung und /oder Profilgeometrie erzeugten Geräusche / Luftschallschwingungen des Reifens oder der Fahrwerks- oder Karosserieteile detektiert werden. Zur Aufnahme der Schwingungen genügt dann ein einfaches Mikrophon, angebracht beispielsweise in der Nähe des Reifens.

Bei einem für die Durchführung eines solchen Verfahrens besonders geeigneten Reifen ändert sich die Profilteilung und / oder die Profilgeometrie des Reifens mit abnehmender Profiltiefe so, dass während des Abrollens des Reifens auf dem Untergrund eine für die verminderte Profiltiefe charakteristische und von einer durch die volle Profiltiefe erzeugte charakteristische Schwingung deutlich unterscheidbare Schwingung erzeugt wird. Dies vereinfacht die definierte Detektion und damit die eindeutige Bestimmung einer kritischen Profiltiefe.

Eine vorteilhafte Ausbildung eines solchen Reifens besteht darin, dass die Profilgeometrie des Reifens so ausgebildet ist, dass der Positivanteil des Profiles sich abhängig von der Profiltiefe vergrössert oder verkleinert. Dadurch erhält eine bei verminderter Profiltiefe geänderte Frequenz einer Schwingung.

Eine weitere vorteilhafte Ausbildung eines solchen Reifens besteht darin, dass die Profilteilung des Reifens so ausgebildet ist, dass sich eine von der Profiltiefe abhängige Pitchfolge ergibt. Auch hierdurch ergibt sich eine bei verminderter Profiltiefe veränderte Frequenz der Schwingung. Verstärkt wird dieser Effekt noch dadurch, dass die Profilteilung des Reifens sich mit abnehmender Profiltiefe im Wesentlichen sprunghaft ändert, etwa dadurch, dass Profilteile geringerer Höhe vorgesehen sind, die erst nach Abrieb des benachbarten höheren Profilteiles, aber dann relativ plötzlich in Kontakt mit der Fahrbahnoberfläche geraten.

In besonders vorteilhafter Weise läßt sich zur Durchführung des Verfahrens nach Anspruch 1 bis 3 ein Reifen verwenden, dessen Profilteilung und / oder Profilgeometrie sich mit abnehmender Profiltiefe so ändert, dass während des Abrollens des Reifens auf dem Untergrund eine für die verminderte Profiltiefe charakteristische und von einer durch die volle Profiltiefe erzeugte charakteristische Schwingung deutlich unterscheidbare Schwingung erzeugt wird.

## Patentansprüche

1. Verfahren zur Messung der Profiltiefe eines Reifens, insbesondere eines Fahrzeugluftreifens, wobei die Messung der Profiltiefe im Betriebszustand während des Abrollens des Reifens erfolgt,
**dadurch gekennzeichnet,**
**dass** die während des Abrollens des Reifens auf dem Untergrund durch die Profilteilung und / oder Profilgeometrie erzeugten Schwingungen des Reifens bzw. Schwingungen von Reifenteilen detektiert und in einer Auswerteeinheit mit einem charakteristischen Sollwert / Schwellenwert für die Schwingungen verglichen werden, welcher einer durch ausreichende Profiltiefe erzeugten solchen Schwingung entspricht, wobei die Auswerteeinheit bei einer Abweichung der detektierten Schwingung vom Sollwert / Schwellenwert, die einer Unterschreitung der Profiltiefe entspricht, ein Signal ausgibt.

2. Verfahren nach Anspruch 1, **dadurch gekennzeichnet, dass** die durch die Profilteilung und / oder Profilgeometrie erzeugten Körperschwingungen /Körperschallschwingungen des Reifens oder der Fahrwerks- oder Karosserieteile detektiert werden.

3. Verfahren nach Anspruch 1 oder 2, **dadurch gekennzeichnet, dass** die durch die Profilteilung und / oder Profilgeometrie erzeugten Geräusche / Luftschallschwingungen des Reifens oder der Fahrwerks- oder Karosserieteile detektiert werden.

4. Reifen zur Durchführung eines Verfahrens nach Anspruch 1 bis 3, **dadurch gekennzeichnet, dass** die Profilteilung und / oder die Profilgeometrie des Reifens sich mit abnehmender Profiltiefe so ändert, dass während des Abrollens des Reifens auf dem Untergrund eine für die verminderte Profiltiefe charakteristische und von einer durch die volle Profiltiefe erzeugte charakteristische Schwingung deutlich unterscheidbare Schwingung erzeugt wird.

5. Reifen nach Anspruch 4, **dadurch gekennzeichnet, dass** die Profilgeometrie des Reifens so ausgebildet ist, dass der Positivanteil des Profiles sich abhängig von der Profiltiefe vergrössert oder verkleinert.

6. Reifen nach Anspruch 4 oder 5, **dadurch gekennzeichnet, dass** die Profilteilung des Reifens so ausgebildet ist, dass sich eine von der Profiltiefe abhängige Pitchfolge ergibt.

7. Reifen nach Anspruch 4 bis 6, **dadurch gekennzeichnet, dass** die Profilteilung des Reifens sich mit abnehmender Profiltiefe im Wesentlichen sprunghaft ändert.

8. Verwendung eines Reifens, dessen Profilteilung und / oder Profilgeometrie sich mit abnehmender Profiltiefe so ändert, dass während des Abrollens des Reifens auf dem Untergrund eine für die verminderte Profiltiefe charakteristische und von einer durch die volle Profiltiefe erzeugte charakteristische Schwingung deutlich unterscheidbare Schwingung erzeugt wird, zur Durchführung eines Verfahrens nach Anspruch 1 bis 3.
